(19) Europäisches Patentamt
European Patent Office
Office européen des brevets

(11) **EP 2 876 963 B1**

(12) **EUROPEAN PATENT SPECIFICATION**

(45) Date of publication and mention
of the grant of the patent:
**01.11.2017 Bulletin 2017/44**

(21) Application number: **13840531.1**

(22) Date of filing: **17.09.2013**

(51) Int Cl.:
*H04W 72/04* (2009.01)    *H04B 7/04* (2017.01)
*H04B 7/06* (2006.01)

(86) International application number:
**PCT/CN2013/083693**

(87) International publication number:
**WO 2014/048265 (03.04.2014 Gazette 2014/14)**

(54) **CONTROL CHANNEL PROCESSING METHOD AND DEVICE**

STEUERKANALVERARBEITUNGSVERFAHREN UND -VORRICHTUNG

PROCÉDÉ ET DISPOSITIF DE TRAITEMENT DE CANAL DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2012 CN 201210361082**

(43) Date of publication of application:
**27.05.2015 Bulletin 2015/22**

(73) Proprietor: **ZTE Corporation
Shenzhen, Guangdong 518057 (CN)**

(72) Inventors:
• **HUA, Yawei
Shenzhen
Guangdong 518057 (CN)**
• **YAO, Chunfeng
Shenzhen
Guangdong 518057 (CN)**

• **LIU, Qiaoyan
Shenzhen
Guangdong 518057 (CN)**

(74) Representative: **Lavoix
Bayerstrasse 83
80335 München (DE)**

(56) References cited:
**EP-A1- 2 045 944       WO-A1-2011/148632
CN-A- 101 485 215     CN-A- 101 820 669
CN-A- 102 257 858     US-A- 6 141 335**

• **ALCATEL: "Fast Beam Selection", 3GPP DRAFT;
R1-030739, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. New York, USA; 20030820, 20 August
2003 (2003-08-20), XP050097851, [retrieved on
2003-08-20]**

## Description

### TECHNICAL FIELD

The disclosure relates to the field of communications, and more particularly to a method and an apparatus for processing a control channel.

### BACKGROUND

With the continuous development of the 3rd Generation (3G) mobile communication system, Long Term Evolution (LTE) comes up.

In an LTE system, space division multiplexing can be carried out according to the weak correlation characteristics of a plurality of spatial channels to improve the system capacity, but this way is limited by the degree of correlation between a base station antenna and a wireless channel. At present, the space division multiplexing of the LTE is only limited to a traffic channel, and the disclosure provides a space division multiplexing solution for a control channel.

During dynamic resource allocation in the LTE system, a control channel (such as a Physical Downlink Control Channel (PDCCH)) is needed to allocate uplink and downlink traffic channel resources, so that the transmission performance of the control channel may directly influence the performance of the whole system. However, the transmission performance of the current control channel is not ideal and downlink control channel resources are very limited. Furthermore, the resource location allocation of the control channel depends on a Cell Radio Network Temporary Identity (C-RNTI) of User Equipment (UE) and the convergence degree of Control Channel Elements (CCE) according to a 3GPP TS 36.213 protocol, as a result, a user to be scheduled usually cannot be scheduled due to the allocation failure of the control channel, particularly when the uplink and the downlink traffic channels adopt the Multiple Input Multiple Output (MIMO) technology. In addition, the control channel may be interfered in a dense area.

ALCATEL: "Fast Beam Selection", 3GPP DRAFT; R1-030739, 3R D GENERATION PARTNERSHIP PROJECT (3GPP), MOBILE COMPETENCE CENTRE; 650, ROUTE DES LUCIOLES ; F-06921 SOPHIA-ANTIPOLIS CEDEX , FRANCE, vol. RAN WG1, no. New York, USA; 20030820, (2003-08-20), XP050097851, discloses a novel fast beam selection technique for the beamforming mode using a "grid of fixed beams".

US 6141335A (2000-10-31) discloses a radio communication system.

### SUMMARY

In view of this, the embodiments of the disclosure provide a method and an apparatus for processing a control channel, in order to reduce interference to a control channel and improve the performance of the control channel.

To this end, the technical solution of the embodiment of the disclosure is implemented as follows.

A method for processing a control channel is provided, as recited in claim 1, and an apparatus for processing a control channel is provided, as recited in claim 5.

Through the technology for processing the control channel in the embodiments of the disclosure, the control channel resources are allocated through an Active Antenna System (AAS) in the LTE system, so that the probability of space division multiplexing of a traffic channel can be increased on the premise of ensuring the normal running of the system, the interference to the control channel can be reduced effectively, and the performance of the control channel is improved.

### BRIEF DESCRIPTION OF THE DRAWINGS

Fig. 1 is a diagram showing the principle of an Active Antenna System (AAS);

Fig. 2 is a diagram showing a flow of processing a control channel in an LTE system using an AAS in an embodiment of the disclosure; and

Fig. 3 is a schematic diagram showing a flow of processing a control channel in an embodiment of the disclosure.

### DETAILED DESCRIPTION

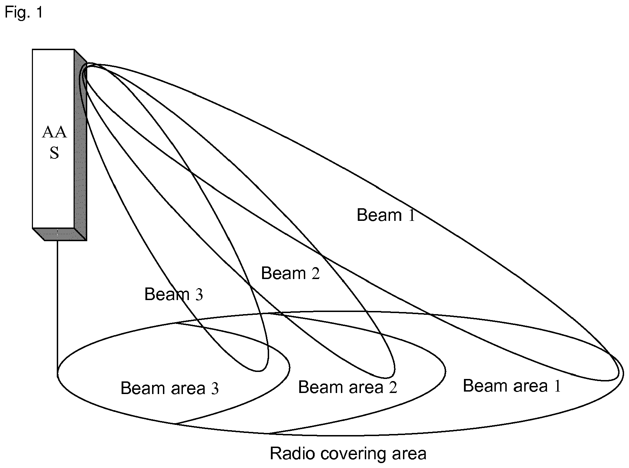

An AAS is a brand new product, which integrates a Radio Remote Unit (RRU) with an antenna and even changes an original antenna feed network into an active one so as to control a beam flexibly. The AAS can form multiple beams through uplink and downlink independent downward inclination angles, dynamic beam forming, inter-carrier/system independent downward inclination angles, and through this multi-beam technology, a traditional single cell is split into multiple beam areas, among which the spatial correlation degree is reduced greatly, as shown in Fig. 1.

In the actual application, a control signal can be sent in an LTE system which adopts the AAS according to an activated beam of a control channel, so as to reduce the interference to an inter-cell control channel and further improve the performance of the system. This is because the ASS multi-beam area covering technology has less interference to an area inside a cell and an area between neighbouring cells, and the interference to the inter-cell control channel can be reduced by an effective control channel transmission way, so as to further improve the capacity of the system.

When the control channel in the LTE system is processed converted based on the AAS, the following steps may be executed:

Step 1: an activated beam area (BA) of the control channel is determined according to the receiving power in respective BAs;

Step 2: control channel resources are allocated according to the scheduling condition in a cell, namely, the control channel resources are allocated after the scheduling is completed. For example, it is assumed that a traditional cell includes M Control Channel Elements (CCEs) and a single cell is divided into N BAs by the AAS technology, the control channel resources under the AAS include M*N CCEs;

Step 3: a control signal is sent according to the activated BAs of the control channel and the allocation condition of the control channel resources in Step 2. Thus, the control channel is not sent in all the BAs but is sent only in the activated BA, thereby effectively reducing the interference to a neighbouring cell, improving the Signal to Interference Ratio (SINR) of the control channel of the neighbouring cell and reducing the degree of convergence of the CCEs on the premise of ensuring the successful transmission of the control channel. In addition, more resources can be available for scheduling even when the control channel resources are the same.

It should be noted that a setting needs to be made according to a control channel transmission way so as to reduce the activated beam of the control channel as much as possible while ensuring that the performance of the control channel is not affected, and to reduce the interference to a neighbouring cell.

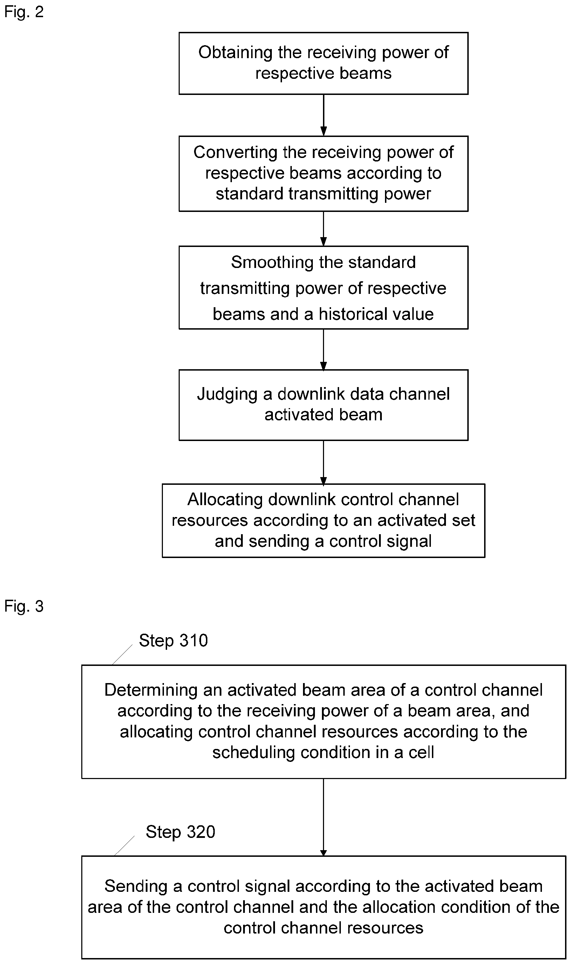

An embodiment is further described below in combination with Fig. 2.

When the control channel in the LTE system is processed by the AAS, the activated beam of the control channel can be judged and the control channel resources can be allocated.

Specifically, when the activated beam of the control channel is judged, the following two methods can be adopted.

Method 1

Step 1.1: The receiving power in respective BAs is obtained, wherein it is assumed that the whole cell is divided into N BAs, the receiving power measured in respective BAs is $P = \{P_1, P_2, \cdots, P_N\}$.

Step 1.2: The receiving power in respective BAs is converted according to standard transmission power for the smoothing processing at different moments, wherein it is assumed that the receiving power is $P_{real}$, the transmitting power at the measurement moment is $PSD_{real}$, and the standard transmitting power is $PSD_{target}$, the receiving power $P_{target}$ converted based on the standard transmitting power is:

$$P_{target} = PSD_{target} + P_{real} - PSD_{real} \tag{1}$$

Then, the converted receiving power in respective BAs is $P_{targe} = \{P_{target1}, P_{target2}, \cdots, P_{targetN}\}$.

Step 1.3: The receiving power converted based on the standard transmitting power in respective BAs is subjected to time-domain smoothing, wherein it is assumed that the historical smoothing value converted based on the standard transmitting power is $\overline{P}_{targe,old} = \{\overline{P}_{target1,old}, \overline{P}_{target2,old}, \cdots, \overline{P}_{targetN,old}\}$, and a smoothing factor is $\alpha$ (0< $\alpha$ <1), the smoothing formula is:

$$\overline{P}_{targe,new} = (1-\alpha) * \overline{P}_{target1,old} + \alpha * P_{target} \tag{2}$$

The receiving power converted based on the standard transmitting power in respective BAs is subjected to smoothing processing according to Formula (2) to obtain the smoothing receiving power $\overline{P}_{targe}$ = $\{\overline{P}_{target1}, \overline{P}_{target2}, \cdots, \overline{P}_{targetN}\}$.

Step 1.4: The proportional relation between the smoothing receiving power in respective BAs and the maximal smoothing receiving power is judged; and when the ratio of the smoothing power value in a BA to the maximal smoothing power of all the BAs is higher than or equal to a threshold Thr4BA1, it is determined that the BA is activated, otherwise, the BA is inactivated.

For example, firstly, the maximal smoothing receiving power $max\overline{P}_{targe} = max(\overline{P}_{target1}, \overline{P}_{target2}, \cdots, \overline{P}_{targetN})$ is calculated; secondly, the ratio of the smoothing power in respective BAs to the $max\overline{P}_{targe}$ is calculated according to Formula (3); and

$$Pro\_i = \frac{\overline{P}_{t\arg ei}}{max\,\overline{P}_{targe}} \qquad (3)$$

finally, whether $Pro\_i$ is higher than or equal to the threshold Thr4BA1 is judged, and if it is higher than or equal to the threshold Thr4BA1, it is determined that the BA is activated. Here, the determination of the activated threshold Thr4BA1 depends on a link simulation result, the larger value in the range of (0, 1) is selected on the premise of ensuring the demodulation performance, and it is suggested that the threshold should be smaller than 0.5. The meaning of method 1 is as follows: the smoothing receiving power in respective activated BAs is required to be higher than or equal to the maximal smoothing receiving power Thr4BA1, thus, the receiving power of users in the activated beam areas can be ensured to be larger, and the BAs of the user having smaller receiving power may not be determined as the activated BAs.

Method 2:

Method 2 may include fourth steps, and Steps 2.1-2.3 are the same as Steps 1.1 to 1.3 in method 1.

Step 2.4: Firstly, the smoothing receiving power in respective BAs are superposed linearly to obtain $Sum\overline{P}_{targe}$; secondly, the smoothing receiving power in respective BAs are arranged in an ascending order, and finally, the smoothing receiving power in respective BAs are selected by the following methods.

Step 2.4.1: All the beams are regarded as activated beams by default, namely, all the beams are within an activated set.

Step 2.4.2: The beams are circulated respectively in an ascending order of the smoothing receiving power, wherein it is assumed that the selected beam is i, $R\_Pro$ is calculated according to Formula (4):

$$R\_Pro = \frac{Sum\,\overline{P}_{targe} - \overline{P}_{targei}}{Sum\,\overline{P}_{targe}} \qquad (4)$$

Step 2.4.3: If $R\_Pro$ is higher than or equal to the threshold Thr4BA2, the beam i is removed from the activated set, and then, Step 2.4.2 is executed again to select the next beam; otherwise, if $R\_Pro$ is lower than the threshold Thr4BA2, the judgment for the activated beam is ended, and the beam area in the activated set is the activated BA. The activated set is the set of the activated BAs.

The Thr4BA2 is in the range of (0, 1); it is suggested that Thr4BA2 should be higher than 0.5 by default and its specific value depends on a link simulation result; and different modulation ways may adopt different thresholds. Method 2 can ensure that the receiving power of the users in the activated BAs is larger, so that the BA where the receiving power is small may not be determined as an activated BA.

It can be seen that method 2 may be: firstly, the obtained receiving power smoothing values in respective BAs are arranged in an ascending order, wherein the minimum smooth value is at the head;

secondly, the smoothing value at the head is subtracted from the sum of smoothing receiving power in respective BAs to obtain a difference which is then subjected to division with the sum of receiving power smoothing values in respective BAs to obtain an activation ratio; and

finally, whether the obtained activation ratio is higher than or equal to a preset activation threshold is judged, and when the activation value is higher than or equal to the activation threshold, the smoothing value at the head is deleted; and the operation of obtaining the activation ratio is repeated till the obtained activation ratio is lower than the activation threshold, and then it is determined that the BAs corresponding to the smoothing value at the head and the remaining smoothing values are activated BAs.

Actually, the thresholds Thr4BA1 and Thr4BA2 can be determined according to the transmission characteristic of the control channel, and the control channel can adopt a QPSK modulation way in the LTE system.

When control channel resources are allocated, the resources can be allocated according to the activated BAs of the control channel. For example, during the current scheduling, firstly, a resource pool of a control channel of a cell is initialized and is determined according to the beam and the bandwidth of the cell; and then, the resources are allocated according to an activated beam and other information. The allocated resources are marked occupied, and the specific resource allocation method is as follows.

It is assumed that a single cell is divided into J BAs, the system bandwidth corresponds to the control channel resources of K Resource Elements (REs), and the resource pool of K REs are generated for respective beams, the resource pool of the cell is N*M, shown as follows:

$$
\begin{bmatrix}
S_{1,1} & S_{1,2} & \cdots & S_{1,J-1} & S_{1,J} \\
S_{2,1} & S_{2,2} & \cdots & S_{2,J-1} & S_{2,J} \\
\vdots & \vdots & \ddots & \vdots & \vdots \\
S_{K-1,1} & S_{K-1,2} & \cdots & S_{K-1,J-1} & S_{N-1,J} \\
S_{K,1} & S_{K,2} & \cdots & S_{K,J-1} & S_{K,J}
\end{bmatrix}.
$$

The resources controlled by a user can be allocated according to the activated BAs of the control channel of the user; it is assumed that the activated beams of the control channel are beam 1 and beam 2, it is necessary to obtain the resource bitmaps of beam 1 and beam 2 during the resource allocation, and public remaining resources are determined according to the occupation marks of the resource bitmaps of beam 1 and beam 2 and then are marked on the resource bitmaps of beam 1 and beam 2 to send a control signal, namely, the control signal is transmitted on the activated beam.

The non-activated beam of the control channel may cause interference to the control channel of a neighbouring cell, so that the interference to the control channel can be reduced effectively if the control channel adopts this resource allocation and transmission way. Meanwhile, the amount of appropriable resources of the control channel is increased, and the performance of the control channel is improved, so as to ensure successful scheduling of uplink and downlink traffic channels.

It can be seen from what described above that, the operation of processing the control channel in this embodiment can be as shown in Fig. 3, the flow includes the following steps:

Step 310: an activated BA of the control channel is determined according to the receiving power in a Beam Area (BA), and control channel resources are allocated according to the scheduling condition in a cell;

Step 320: a control signal is sent according to the activated BAs of the control channel and the allocation condition of the control channel resources.

It should be noted that the apparatus which can process the control channel may be an apparatus which can manage communication resources, such as a base station and a Radio Network Controller (RNC).

In a summary, both the method and the apparatus in the embodiments of the disclosure processes a control channel by a technology which adopts AAS to allocate the control channel resources in the LTE system, so that the probability of space division multiplexing of a traffic channel can be increased while ensuring the normal running of the system, the interference to the control channel can be reduced effectively, and the performance of the control channel is improved.

The above are only the embodiments of the disclosure, and are not intended to limit the scope of protection of the claims of the disclosure.

**Claims**

1. A method for processing a control channel, comprising:

   determining (S310) an activated Beam Area, BA, of a control channel according to receiving power in a BA;
   allocating (S310) control channel resources according to a scheduling condition in a cell; and
   sending (S320) a control signal according to the activated BA of the control channel and an allocation condition of the control channel resources;

**characterized in that**,

wherein determining the activated BA of the control channel comprises:

obtaining receiving power in respective BAs and converting the receiving power in respective BAs according to standard transmitting power and performing time-domain smoothing on the receiving power converted based on standard transmitting power in respective BAs; judging a proportional relation between smoothing receiving power in respective BAs and maximal smoothing receiving power, and when a ratio of smoothing power value in a BA to the maximal smoothing power of all the BAs is higher than or equal to a first activation threshold, determining that the BA is activated; or,
obtaining receiving power in respective BAs and converting the receiving power in respective BAs according to standard transmitting power, performing time-domain smoothing on the receiving power converted based on standard transmitting power in respective BAs, and arranging obtained receiving power smoothing values in respective BAs in an ascending order, wherein a minimum smoothing value is arranged at a head;
subtracting the smoothing value at the head from a sum of smoothing receiving power in respective BAs to obtain a difference, and subjecting the difference and a sum of receiving power smoothing values in respective BAs to division computation to obtain an activation ratio; judging whether the activation ratio is higher than or equal to a preset second activation threshold; and when the activation value is higher than or equal to the second activation threshold, deleting the smoothing value at the head; repeating the operation of obtaining the activation ratio till the obtained activation ratio is lower than the second activation threshold, and then determining that BAs corresponding to the smoothing value at the head and BAs corresponding to remaining smoothing values are activated BAs.

2. The method according to claim 1, wherein
the first and the second activation thresholds depend on a link simulation result and are in a range of (0, 1) on a premise of ensuring a demodulation performance.

3. The method according to claim 2, wherein the first activation threshold is lower than 0.5 and the second activation threshold is higher than 0.5.

4. The method according to any one of claims 1 to 3, wherein allocating the control channel resources comprises:

at current scheduling moment, firstly, initializing a resource pool of the control channel of the cell and determining the resource pool according to a beam and bandwidth of the cell; secondly, allocating resources according to the activated beam, and finally, transmitting the control signal on the activated beam.

5. An apparatus for processing a control channel, which is configured to determine an activated Beam Area, BA, of a control channel according to receiving power in a BA, allocate control channel resources according to a scheduling condition in a cell, and send a control signal according to the activated BA of the control channel and an allocation condition of the control channel resources;
**characterized in that**,
wherein when determining the activated BA of the control channel, the apparatus is configured to:

obtain receiving power in respective BAs and convert the receiving power in respective BAs according to standard transmitting power, perform time-domain smoothing on the receiving power converted based on standard transmitting power in respective BAs, judge a proportional relation between smoothing receiving power in respective BAs and maximal smoothing receiving power, and determine that a BA is activated when a ratio of smoothing power value of the BA to the maximal smoothing power in all the BAs is higher than or equal to a first activation threshold;
or,
obtain receiving power in respective BAs and convert the receiving power in respective BAs according to standard transmitting power, perform time-domain smoothing on the receiving power converted based on standard transmitting power in respective BAs, and arrange obtained receiving power smoothing values in respective BAs in an ascending order, wherein a minimum smoothing value is arranged at a head; and
subtract the smoothing value at the head from a sum of smoothing receiving power in respective BAs to obtain a difference, and subject the difference and a sum of receiving power smoothing values in respective Bas to division computation to obtain an activation ratio; judge whether the activation ratio is higher than or equal to a preset second activation threshold; and when the activation value is higher than or equal to the second activation threshold, delete the smoothing value at the head; and repeat the operation of obtaining the activation ratio till the obtained activation ratio is lower than the second activation threshold, and then determine that BAs corresponding to the smoothing value at the head and BAs corresponding to remaining smoothing values are activated BAs.

6. The apparatus according to claim 5, wherein
the first and the second activation thresholds depend on a link simulation result and are in a range of (0, 1) on a premise of ensuring a demodulation performance.

7. The apparatus according to claim 6, wherein the first activation threshold is lower than 0.5 and the second activation threshold is higher than 0.5.

8. The apparatus according to any one of claims 5 to 7, wherein when allocating the control channel resources, the apparatus is configured to:

at current scheduling moment, firstly, initialize a resource pool of the control channel of the cell and determine the resource pool according to a beam and bandwidth of the cell; secondly, allocate resources according to the activated beam, and finally, transmit the control signal on the activated beam.

9. The apparatus according to claim 5, wherein the apparatus is a base station.

**Patentansprüche**

1. Verfahren zum Verarbeiten eines Steuerkanals, das umfasst:

Ermitteln (S310) eines aktivierten Strahlbereichs, BA, eines Steuerkanals gemäß einer Empfangsleistung in einem BA;
Zuordnen (S310) von Steuerkanalressourcen gemäß einer Planungsbedingung in einer Zelle; und
Senden (S320) eines Steuersignals gemäß dem aktivierten BA des Steuerkanals und einer Zuordnungsbedingung der Steuerkanalressourcen;

**dadurch gekennzeichnet, dass**:

wobei das Ermitteln des aktivierten BA des Steuerkanals umfasst:

Erhalten von Empfangsleistung in jeweiligen BAs und Umwandeln der Empfangsleistung in jeweiligen BAs gemäß einer Standardsendeleistung und Durchführen einer Zeitdomänenglättung an der Empfangsleistung, die auf Basis einer Standardsendeleistung in jeweiligen BAs umgewandelt wird; Beurteilen einer proportionalen Beziehung zwischen einer Glättungsempfangsleistung in jeweiligen BAs und maximaler Glättungsempfangsleistung und wenn ein Verhältnis eines Glättungsleistungswerts in einem BA zur maximalen Glättungsleistung in allen BAs höher als ein erster Aktivierungsschwellenwert oder gleich diesem ist, Ermitteln, dass der BA aktiviert ist;
oder
Erhalten von Empfangsleistung in jeweiligen BAs und Umwandeln der Empfangsleistung in jeweiligen BAs gemäß einer Standardsendeleistung, Durchführen einer Zeitdomänenglättung an der Empfangsleistung, die auf Basis einer Standardsendeleistung in jeweiligen BAs umgewandelt wird, und Anordnen von erhaltenen Empfangsleistungsglättungswerten in jeweiligen BAs in aufsteigender Reihenfolge, wobei ein Mindestglättungswert ganz oben angeordnet wird;
Subtrahieren des Glättungswerts ganz oben von einer Summe aus einer Glättungsempfangsleistung in jeweiligen BAs, um eine Differenz zu erhalten, und Unterziehen der Differenz und einer Summe von Empfangsleistungsglättungswerten in jeweiligen BAs einer Teilungsberechnung, um ein Aktivierungsverhältnis zu erhalten; Beurteilen, ob das Aktivierungsverhältnis höher als ein voreingestellter zweiter Aktivierungsschwellenwert oder gleich diesem ist; und wenn der Aktivierungswert höher als der zweite Aktivierungsschwellenwert oder gleich diesem ist, Löschen des Glättungswerts ganz oben; Wiederholen des Vorgangs zum Erhalten des Aktivierungsverhältnisses, bis das erhaltene Aktivierungsverhältnis geringer als der zweite Aktivierungsschwellenwert ist, und danach Ermitteln, dass BAs, die dem Glättungswert ganz oben entsprechen, und BAs, die restlichen Glättungswerten entsprechen, aktivierte BAs sind.

**2.** Verfahren nach Anspruch 1, wobei:

der erste und der zweite Aktivierungsschwellenwert von einem Verbindungssimulationsergebnis abhängen und in einem Bereich von (0, 1) liegen, unter der Maßgabe, dass eine Demodulierungsleistung gewährleistet ist.

**3.** Verfahren nach Anspruch 2, wobei der erste Aktivierungsschwellenwert geringer als 0,5 ist und der zweite Aktivierungsschwellenwert größer als 0,5 ist.

**4.** Verfahren nach einem der Ansprüche 1 bis 3, wobei das Zuordnen der Steuerkanalressourcen umfasst:

in einem aktuellen Planungsmoment erstens Initialisieren eines Ressourcenpools des Steuerkanals der Zelle und Ermitteln des Ressourcenpools gemäß einem Strahl und einer Bandbreite der Zelle; zweitens Zuordnen von Ressourcen gemäß dem aktivierten Strahl und schließlich Senden des Steuersignals auf dem aktivierten Strahl.

**5.** Vorrichtung zum Verarbeiten eines Steuerkanals, die so konfiguriert ist, dass sie einen aktivierten Strahlbereich, BA, eines Steuerkanals gemäß einer Empfangsleistung in einem BA ermittelt, Steuerkanalressourcen gemäß einer Planungsbedingung in einer Zelle zuordnet und ein Steuersignal gemäß dem aktivierten BA des Steuerkanals und einer Zuordnungsbedingung der Steuerkanalressourcen sendet;
**dadurch gekennzeichnet, dass**:

wobei die Vorrichtung beim Ermitteln des aktivierten BA des Steuerkanals konfiguriert ist zum:

Erhalten von Empfangsleistung in jeweiligen BAs und Umwandeln der Empfangsleistung in jeweiligen BAs gemäß einer Standardsendeleistung, Durchführen einer Zeitdomänenglättung an der Empfangsleistung, die auf Basis einer Standardsendeleistung in jeweiligen BAs umgewandelt wird; Beurteilen einer proportionalen Beziehung zwischen einer Glättungsempfangsleistung in jeweiligen BAs und maximaler Glättungsempfangsleistung und Ermitteln, dass der BA aktiviert ist, wenn ein Verhältnis eines Glättungsleistungswerts des BA zur maximalen Glättungsleistung in allen BAs höher als ein erster Aktivierungsschwellenwert oder gleich diesem ist;
oder
Erhalten von Empfangsleistung in jeweiligen BAs und Umwandeln der Empfangsleistung in jeweiligen BAs gemäß einer Standardsendeleistung, Durchführen einer Zeitdomänenglättung an der Empfangsleistung, die auf Basis einer Standardsendeleistung in jeweiligen BAs umgewandelt wird, und Anordnen von erhaltenen Empfangsleistungsglättungswerten in jeweiligen BAs in aufsteigender Reihenfolge, wobei ein Mindestglättungswert ganz oben angeordnet wird; und
Subtrahieren des Glättungswerts ganz oben von einer Summe aus einer Glättungsempfangsleistung in jeweiligen BAs, um eine Differenz zu erhalten, und Unterziehen der Differenz und einer Summe von Empfangsleistungsglättungswerten in jeweiligen BAs einer Teilungsberechnung, um ein Aktivierungsverhältnis zu erhalten; Beurteilen, ob das Aktivierungsverhältnis höher als ein voreingestellter zweiter Aktivierungsschwellenwert oder gleich diesem ist; und wenn der Aktivierungswert höher als der zweite Aktivierungsschwellenwert oder gleich diesem ist, Löschen des Glättungswerts ganz oben; und Wiederholen des Vorgangs zum Erhalten des Aktivierungsverhältnisses, bis das erhaltene Aktivierungsverhältnis geringer als der zweite Aktivierungsschwellenwert ist, und danach Ermitteln, dass BAs, die dem Glättungswert ganz oben entsprechen, und BAs, die restlichen Glättungswerten entsprechen, aktivierte BAs sind.

**6.** Vorrichtung nach Anspruch 5, wobei:

der erste und der zweite Aktivierungsschwellenwert von einem Verbindungssimulationsergebnis abhängen und in einem Bereich von (0, 1) liegen, unter der Maßgabe, dass eine Demodulierungsleistung gewährleistet ist.

**7.** Vorrichtung nach Anspruch 6, wobei der erste Aktivierungsschwellenwert geringer als 0,5 ist und der zweite Aktivierungsschwellenwert größer als 0,5 ist.

**8.** Vorrichtung nach einem der Ansprüche 5 bis 7, wobei die Vorrichtung beim Zuordnen der Steuerkanalressourcen konfiguriert ist zum:

in einem aktuellen Planungsmoment erstens Initialisieren eines Ressourcenpools des Steuerkanals der Zelle und Ermitteln des Ressourcenpools gemäß einem Strahl und einer Bandbreite der Zelle; zweitens Zuordnen von Ressourcen gemäß dem aktivierten Strahl und schließlich Senden des Steuersignals auf dem aktivierten Strahl.

**9.** Vorrichtung nach Anspruch 5, wobei die Vorrichtung eine Basisstation ist.


**Revendications**

**1.** Procédé de traitement d'un canal de commande, comprenant :

la détermination (S310) d'une Zone d'Empreinte de Faisceau, ZEF, activée d'un canal de commande en fonction d'une puissance de réception dans une ZEF ;
l'affectation (S310) de ressources de canal de commande en fonction d'une condition de programmation dans une cellule ; et
l'envoi (S320) d'un signal de commande en fonction de la ZEF activée du canal de commande et d'une condition d'affectation des ressources du canal de commande ;
**caractérisé en ce que**

la détermination de la ZEF activée du canal de commande comprend :

l'obtention d'une puissance de réception dans les ZEF respectives et la conversion de la puissance de réception dans les ZEF respectives en fonction d'une puissance de transmission standard et la réalisation d'un lissage dans le domaine temporel sur la puissance de réception convertie sur la base d'une puissance de transmission standard dans les ZEF respectives ; l'estimation d'une relation proportionnelle entre la puissance de réception lissée dans les ZEF respectives et une puissance de réception maximale lissée, et lorsqu'un rapport de la valeur de lissage dans une ZEF à la valeur de lissage maximale de toutes les ZEF est supérieur ou égal à un premier seuil d'activation, la détermination du fait que la ZEF est activée ;
ou
l'obtention de la puissance de réception dans les ZEF respectives et la conversion de la puissance de réception dans les ZEF respectives en fonction d'une puissance de transmission standard, la réalisation d'un lissage dans le domaine temporel sur la puissance de réception convertie sur la base d'une puissance de transmission standard dans les ZEF respectives, et l'agencement des valeurs de lissage de la puissance de réception obtenues dans les ZEF respectives dans un ordre croissant, une valeur de lissage minimale étant agencée en tête ;
la soustraction de la valeur de lissage située en tête d'une somme des puissances de réception lissées des ZEF respectives pour obtenir une différence, et l'exécution, sur la différence et sur une somme des valeurs de lissage de la puissance de réception dans les ZEF respectives, d'un calcul de division pour obtenir un rapport d'activation ; l'estimation du fait que le rapport d'activation est ou non supérieur ou égal à un second seuil d'activation prédéfini ; et lorsque la valeur d'activation est supérieure ou égale au second seuil d'activation, la suppression de la valeur de lissage située en tête ; la répétition de l'opération d'obtention du rapport d'activation jusqu'à ce que le rapport d'activation obtenu soit inférieur au second seuil d'activation, puis la détermination du fait que les ZEF qui correspondent à la valeur de lissage située en tête et les ZEF qui correspondent aux valeurs de lissage restantes sont des ZEF activées.

**2.** Procédé selon la revendication 1, dans lequel
les premier et second seuils d'activation dépendent d'un résultat de simulation de liaison et se trouvent dans une plage de (0, 1) en partant du principe qu'une performance de démodulation est assurée.

**3.** Procédé selon la revendication 2, dans lequel le premier seuil d'activation est inférieur à 0,5 et le second seuil d'activation est supérieur à 0,5.

**4.** Procédé selon l'une quelconque des revendications 1 à 3, dans lequel l'affectation des ressources du canal de commande comprend :

à un moment actuel de programmation, premièrement, l'initialisation d'un groupes de ressources du canal de commande de la cellule et la détermination du groupe de ressources en fonction d'un faisceau et d'une largeur de bande de la cellule ; deuxièmement, l'affectation de ressources en fonction du faisceau activé et enfin, la transmission du signal de commande sur le faisceau activé.

5. Appareil de traitement d'un canal de commande, qui est conçu pour déterminer une zone d'empreinte de faisceau, ZEF, activée d'un canal de commande en fonction d'une puissance de réception dans une ZEF, affecter des ressources du canal de commande en fonction d'une condition de programmation dans une cellule, et envoyer un signal de commande en fonction de la ZEF activée du canal de commande et d'une condition d'affectation des ressources du canal de commande ;

**caractérisé en ce que**

pour déterminer la ZEF activée du canal de commande, l'appareil est conçu pour :

obtenir une puissance de réception dans les ZEF respectives et convertir la puissance de réception dans les ZEF respectives en fonction d'une puissance de transmission standard, réaliser un lissage dans le domaine temporel sur la puissance de réception convertie sur la base d'une puissance de transmission standard dans les ZEF respectives, estimer une relation proportionnelle entre la puissance de réception lissée dans les ZEF respectives et une puissance de réception maximale lissée, et déterminer qu'une ZEF est activée lorsqu'un rapport d'une valeur de lissage de la ZEF à la valeur de lissage maximale de toutes les ZEF est supérieur ou égal à un premier seuil d'activation ;

ou

obtenir une puissance de réception dans les ZEF respectives et convertir la puissance de réception dans les ZEF respectives en fonction d'une puissance de transmission standard, réaliser un lissage dans le domaine temporel sur la puissance de réception convertie sur la base d'une puissance de transmission standard dans les ZEF respectives, et agencer les valeurs de lissage de la puissance de réception obtenues dans les ZEF respectives dans un ordre croissant, une valeur de lissage minimale étant agencée en tête ; et

soustraire la valeur de lissage située en tête d'une somme des puissances de réception lissées des ZEF respectives pour obtenir une différence, et exécuter, sur la différence et sur une somme des valeurs de lissage de la puissance de réception dans les ZEF respectives, un calcul de division pour obtenir un rapport d'activation ; estimer si le rapport d'activation est ou non supérieur ou égal à un second seuil d'activation prédéfini ; et lorsque la valeur d'activation est supérieure ou égale au second seuil d'activation, supprimer la valeur de lissage située en tête ; et répéter l'opération d'obtention du rapport d'activation jusqu'à ce que le rapport d'activation obtenu soit inférieur au second seuil d'activation, puis déterminer que les ZEF qui correspondent à la valeur de lissage située en tête et les ZEF qui correspondent aux valeurs de lissage restantes sont des ZEF activées.

6. Appareil selon la revendication 5, dans lequel

les premier et second seuils d'activation dépendent d'un résultat de simulation de liaison et se trouvent dans une plage de (0, 1) en partant du principe qu'une performance de démodulation est assurée.

7. Appareil selon la revendication 6, dans lequel le premier seuil d'activation est inférieur à 0,5 et le second seuil d'activation est supérieur à 0,5.

8. Appareil selon l'une quelconque des revendications 5 à 7, dans lequel pour affecter les ressources du canal de commande, l'appareil est conçu pour :

à un moment actuel de programmation, premièrement, initialiser un groupe de ressources du canal de commande de la cellule et déterminer le groupe de ressources en fonction d'un faisceau et d'une largeur de bande de la cellule ; deuxièmement, affecter des ressources en fonction du faisceau activé et enfin, transmettre le signal de commande sur le faisceau activé.

9. Appareil selon la revendication 5, dans lequel l'appareil est une station de base.

Fig. 1

AA
S

Beam 1

Beam 2

Beam 3

Beam area 3    Beam area 2    Beam area 1

Radio covering area

Fig. 2

```
┌─────────────────────────────┐
│   Obtaining the receiving power of │
│        respective beams          │
└─────────────────────────────┘
                │
                ▼
┌─────────────────────────────┐
│   Converting the receiving power of │
│   respective beams according to    │
│     standard transmitting power    │
└─────────────────────────────┘
                │
                ▼
┌─────────────────────────────┐
│     Smoothing the standard       │
│   transmitting power of respective │
│    beams and a historical value   │
└─────────────────────────────┘
                │
                ▼
┌─────────────────────────────┐
│   Judging a downlink data channel  │
│          activated beam          │
└─────────────────────────────┘
                │
                ▼
┌─────────────────────────────┐
│   Allocating downlink control channel │
│  resources according to an activated set │
│       and sending a control signal      │
└─────────────────────────────┘
```

Fig. 3

Step 310

```
┌───────────────────────────────────────────┐
│  Determining an activated beam area of a control channel │
│    according to the receiving power of a beam area, and  │
│    allocating control channel resources according to the │
│              scheduling condition in a cell              │
└───────────────────────────────────────────┘
                          │
                          ▼
```

Step 320

```
┌───────────────────────────────────────────┐
│  Sending a control signal according to the activated beam │
│  area of the control channel and the allocation condition of the │
│                control channel resources                 │
└───────────────────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6141335 A

### Non-patent literature cited in the description

- Fast Beam Selection. **ALCATEL.** 3GPP DRAFT; R1-030739, 3R D GENERATION PARTNERSHIP PROJECT (3GPP). MOBILE COMPETENCE CENTRE, 20 August 2003